# EUROPÄISCHE PATENTSCHRIFT

(11) **EP 4 163 133 B1**
(45) Veröffentlichungstag und Bekanntmachung des Hinweises auf die Patenterteilung: **06.08.2025**
(21) Anmeldenummer: 21201630.7
(22) Anmeldetag: 08.10.2021
(51) Int. Cl.: B60D 1/36, B60D 1/62, B60W 30/00, G06T 7/00

(54) **VERFAHREN ZUM UNTERSTÜTZEN WÄHREND EINES ANKOPPELVORGANGS MIT EINEM ANHÄNGER, RECHENEINRICHTUNG SOWIE ASSISTENZSYSTEM FÜR EIN FAHRZEUG**
METHOD FOR SUPPORTING DURING A COUPLING PROCESS WITH A TRAILER, COMPUTING DEVICE AND ASSISTANCE SYSTEM FOR A VEHICLE
PROCÉDÉ D'AIDE LORS D'UN PROCESSUS D'ACCOUPLEMENT D'UNE REMORQUE, DISPOSITIF DE CALCUL, AINSI QUE SYSTÈME D'AIDE POUR UN VÉHICULE

(43) Veröffentlichungstag der Anmeldung: 12.04.2023
(73) Patentinhaber: Bayerische Motoren Werke Aktiengesellschaft, 80809 München (DE)
(72) Erfinder: Stroebel, Michael, 82194 Gröbenzell (DE)

(56) Entgegenhaltungen:
- WO-A1-2015/001065
- DE-A1- 102016 215 248
- DE-A1- 102020 122 363

## Beschreibung

Die vorliegende Erfindung betrifft ein Verfahren zum Unterstützen eines Fahrers eines Fahrzeugs bei einem Ankoppelvorgang des Fahrzeugs mit einem parallel zu einer Fahrbahn geparkten Anhänger. Darüber hinaus betrifft die vorliegende Erfindung ein Assistenzsystem für ein Fahrzeug zum Unterstützen eines Fahrers des Fahrzeugs bei einem Ankoppelvorgang des Fahrzeugs mit einem parallel zu einer Fahrbahn geparkten Anhänger. Schließlich betrifft die vorliegende Erfindung eine Recheneinrichtung für ein Assistenzsystem eines Fahrzeugs.

Verfahren und Systeme zum Unterstützen eines Fahrers eines Fahrzeugs bei einem Ankoppelvorgang, bei welchem ein Anhänger an das Fahrzeug angekoppelt wird, sind seit geraumer Zeit bekannt. Derartige Systeme werden oftmals auch als Trailer Coupling Assistant bezeichnet. Meist wird dabei mit der vorhandenen Sensorik des Fahrzeugs, beispielsweise einem Ultraschall-Sensor, einer Kamera oder dergleichen, die Anhängerkupplung des Anhängers erfasst. Im Anschluss daran kann der Fahrer bei einem Manövrieren des Fahrzeugs hin zu einer möglichen Koppelposition unterstützt werden, sodass der Anhänger anschließend an das Fahrzeug angekoppelt werden kann.

Die Druckschrift DE 10 2009 045 284 A1 betrifft ein Verfahren zur Unterstützung eines Fahrers eines Kraftfahrzeugs bei einem Fahrmanöver zum Ankoppeln eines anzukoppelnden Objekts mit einem Ankopplungspunkt an eine Anhängevorrichtung des Kraftfahrzeugs, bei dem das anzukoppelnde Objekt steht und das Kraftfahrzeug zum anzukoppelnden Objekt bewegt wird, bei dem zunächst der Abstand und die Richtung des Ankopplungspunktes zur Anhängevorrichtung des Kraftfahrzeugs mit mindestens einem Abstandsensor erfasst wird und der Abstand und die Richtung zwischen Ankopplungspunkt und Anhängevorrichtung für den Fahrer dargestellt wird.

Die Offenlegungsschrift DE 10 2010 004 920 A1 betrifft eine Vorrichtung zur Unterstützung des Ankuppelns eines Anhängers an eine Anhängerkupplung eines Kraftfahrzeugs sowie ein Verfahren zum Ankuppeln eines Anhängers an ein Kraftfahrzeug. Dabei sind Einrichtungen zur Ermittlung der Relativposition einer Anhängerkupplung eines Anhängers in Bezug zur Anhängerkupplung des Kraftfahrzeugs sowie zum Steuern der Bewegung des Kraftfahrzeugs und/oder einer Relativbewegung der Anhängerkupplung des Kraftfahrzeugs in Bezug zum Kraftfahrzeug auf der Grundlage der sensorisch ermittelten Relativposition vorgesehen.

Die Druckschrift DE 10 2018 202 613 A1 betrifft ein Verfahren zum Unterstützen eines Ankoppelvorgangs eines Kraftfahrzeugs an einen Anhänger, bei welchem mittels eines Anhängerkuppelassistenten eine Position eines anhängerseitigen Kupplungselements erkannt und basierend darauf das Fahrzeug zumindest teilautonom in eine Zielposition manövriert wird, in welcher eine Anhängerkupplung des Kraftfahrzeugs in einer vorgegebenen Ankoppelstellung zum anhängerseitigen Kupplungselement angeordnet ist. Dabei wird während des Manövriervorgangs mittels einer Einparkhilfe ein rückwärtiger Überwachungsbereich des Kraftfahrzeugs überwacht. Dabei wird die Einparkhilfe bei deaktiviertem Anhängerkuppelassistenten in einem Standardmodus betrieben. Ferner wird die Einparkhilfe bei aktiviertem Anhängerkuppelassistenten in einem Ankoppelmodus betrieben, in welchem mittels der Einparkhilfe auf die im rückwärtigen Bereich bezogene Hinderniswarnungen anders als im Standardmodus ausgegeben werden. Das Dokument DE 10 2016 215248 A1 offenbart ebenfalls ein derartiges Verfahren.

Es ist Aufgabe der vorliegenden Erfindung, eine Lösung aufzuzeigen, wie ein Fahrer eines Fahrzeugs über den Stand der Technik hinaus während eines Ankoppelvorgangs mit einem Anhänger unterstützt werden kann.

Diese Aufgabe wird erfindungsgemäß durch ein Verfahren, durch eine Recheneinrichtung sowie durch ein Assistenzsystem für ein Fahrzeug mit den Merkmalen gemäß den unabhängigen Ansprüchen gelöst. Vorteilhafte Weiterbildungen der vorliegenden Erfindung sind in den abhängigen Ansprüchen angegeben.

Ein erfindungsgemäßes Verfahren zum Unterstützen eines Fahrers eines Fahrzeugs bei einem Ankoppelvorgang des Fahrzeugs mit einem parallel zu einer Fahrbahn geparkten Anhänger umfasst ein Empfangen von Umfelddaten von zumindest einem Umfeldsensor. Zusätzlich umfasst das Verfahren ein Erfassen des parallel zur Fahrbahn geparkten Anhängers mittels der Umfelddaten. Darüber hinaus umfasst das Verfahren ein Bestimmen von zumindest einer Koppelposition, welche eine mögliche Position des Fahrzeugs zum Ankoppeln des parallel zur Fahrbahn geparkten Anhängers beschreibt. Schließlich umfasst das Verfahren ein Unterbreiten von zumindest einem Koppelpositionsvorschlag an den Fahrer, wobei der Koppelpositionsvorschlag auf der zumindest einen Koppelposition basiert. Bei dem Verfahren wird auch eine Freifläche, welche eine in Zugrichtung vor dem Anhänger befindliche Fläche beschreibt, mittels der Umfelddaten bestimmt. Zusätzlich wird die Freifläche in Abhängigkeit einer in Zugrichtung des Anhängers bestimmten Freiflächenlänge charakterisiert. Darüber hinaus wird die zumindest eine Koppelposition in Abhängigkeit von der charakterisierten Freiflächenlänge bestimmt.

Das Fahrzeug kann beispielsweise als Personenkraftwagen ausgebildet sein. Darüber hinaus kann es sich bei dem Fahrzeug auch um einen Lastkraftwagen, einen Nutzkraftwagen, ein Wohnmobil oder dergleichen handeln.

Der Anhänger kann beispielsweise als einfacher Pkw-Anhänger ausgebildet sein, welcher sowohl eine Auflaufbremse als auch eine eigene Betriebsbremse aufweisen kann. Darüber hinaus sind ebenso Bootstrailer, Wohnwagen, Pferdeanhänger, Sattelanhänger oder dergleichen denkbar. Im Allgemeinen ist dabei die Lenkungstechnik des Anhängers unerheblich. Insbesondere kann es sich also um einen ungelenkten Anhänger (starre Achse) handeln. Darüber hinaus kann der Anhänger auch eine Schwenkachslenkung bzw. eine Drehschemellenkung aufweisen.

Der Begriff des Ankoppelvorgangs, wie er in diesem Dokument verwendet wird, umfasst dabei insbesondere auch das manuelle sowie zumindest teilautomatisierte Manövrieren bzw. Rangieren des Fahrzeugs entlang einer Trajektorie, an deren Ende der Anhänger an das Fahrzeug gekoppelt werden kann bzw. an deren Ende sich das Fahrzeug in der Koppelposition befindet.

Unter dem Begriff des "zumindest teilautomatisierten" Fahrens bzw. Manövrierens ist im Rahmen des Dokuments Fahren bzw. Manövrieren mit automatisierter Quer- und/oder Längsführung zu verstehen. Der Begriff des "zumindest teilautomatisierten" Fahrens bzw. Manövrierens umfasst automatisiertes Fahren mit einem beliebigen Automatisierungsgrad. Beispielhafte Automatisierungsgrade sind assistiertes, teilautomatisiertes, hochautomatisiertes, vollautomatisiertes und autonomes Fahren (mit jeweils zunehmendem Automatisierungsgrad).

Bei dem erfindungsgemäßen Verfahren wird also der Fahrer des Fahrzeugs während eines Ankoppelvorgangs, bei welchem das Fahrzeug mit einem parallel zu einer Fahrbahn geparkten Anhänger gekoppelt werden soll, unterstützt. Dabei kann der Fahrer das Fahrzeug beispielsweise langsam an dem Anhänger vorbei manövrieren, wobei Umfelddaten von zumindest einem Umfeldsensor während des Manövrierens eine Umgebung des Fahrzeugs, in der sich der Anhänger befindet, erfassen bzw. beschreiben. Ein derartiges Vorgehen ist bereits bekannt von so genannten Einparkassistenten.

Vorzugsweise ist der zumindest eine Umfeldsensor am Fahrzeug angeordnet. Der zumindest eine Umfeldsensor kann dabei beispielsweise eine Kamera, ein Radar-, ein Lidar-, ein Ultraschall-Sensor oder dergleichen sein. Insbesondere ist also auch eine Kombination verschiedener Sensortypen möglich. Insbesondere ist es dabei denkbar, dass sowohl ein Ultraschall-Sensor sowie eine Kamera verwendet werden. Mittels der Umfelddaten kann der parallel zur Fahrbahn geparkte Anhänger erfasst werden. Zudem kann auch die Freifläche, welche sich in Zugrichtung vor dem Anhänger befindet, mittels der Umfelddaten erfasst und/oder bestimmt werden. Darüber hinaus ist es auch denkbar, dass der zumindest eine Umfeldsensor, beispielsweise in Form von zumindest einem Ultraschall-Sensoren oder einer Kamera, an dem Anhänger angeordnet ist und per Funk- oder Kabelverbindung die Umfelddaten überträgt. Ebenso kann der zumindest eine Umfeldsensor Teil eines Infrastruktursystems sein. Beispielsweise kann ein derartiges Infrastruktursystem eine Parkplatz- oder Verkehrsüberwachungsanlage sein. Bekannte Stichworte in diesem Zusammenhang sind sogenannte automatisierte Valet-Parking-Systeme sowie sogenannte Smart-City-Systeme.

Der erfasste Anhänger kann beispielsweise durch eine Orientierung der Anhängerlängsachse, also der Längsachse des Anhängers, durch die Position der Anhängerkupplung des Anhängers, durch die Position der Achsen und/oder durch seine Abmessungen beschrieben werden.

Sofern der Anhänger eine Schwenkachslenkung bzw. eine Drehschemellenkung aufweist, so kann es von Vorteil sein, wenn beim Bestimmen der zumindest einen Koppelposition zusätzlich eine rotatorische Bewegung der gelenkten Achse in Betracht gezogen wird. Beispielsweise kann es bei einer Schwenkachslenkung bzw. einer Drehschemellenkung vorkommen, dass die Deichsel des Anhängers nicht parallel zur Längsachse des gesamten Anhängers ausgerichtet ist und/oder der Anhänger aufgrund dessen nicht unmittelbar an das Fahrzeug gekoppelt werden kann. In einem derartigen Fall kann es dennoch von Vorteil sein, wenn ein Rotationsbereich der Deichsel erfasst bzw. im Zuge der Bestimmung der zumindest einen Koppelposition berücksichtigt wird. So kann in dem eben beschriebenen Fall zumindest eine Koppelposition bestimmt werden, bei welcher zum Koppeln des Anhängers an das Fahrzeug, sofern dieses sich in der zumindest einen Koppelposition befindet, die Deichsel bzw. die gelenkte Achse des Anhängers gegebenenfalls rotatorisch bewegt werden muss. Ein analoges Beispiel ergibt sich, wenn die Längsachse des (ungelenkten) Anhängers beispielsweise in einem Winkel von 15° zur Fahrbahn (in Richtung des Fahrbahnrands) orientiert ist und der Anhänger folglich nicht absolut parallel zur Fahrbahn positioniert ist und daher zum Koppeln zusätzlich rotatorisch bewegt werden muss.

In diesem Dokument wird der nachfolgend der Begriff der Anhänger-Kupplungseinheit sowie der Begriff der Fahrzeug-Kupplungseinheit verwendet. Der Begriff der Anhänger-Kupplungseinheit sowie der Begriff der Fahrzeug-Kupplungseinheit soll allgemein zwei mechanisch zusammenwirkende, beispielsweise ineinandergreifende, Vorrichtungen bezeichnen, welche dazu eingerichtet sind, das Fahrzeug mit dem Anhänger zu verbinden. Je nach Art des Fahrzeuges und des Anhängers ist beispielsweise eine Bolzenkupplung, eine Maulkupplung oder eine Sattelkupplung denkbar und entsprechende Kupplungsteile sollen von dem Begriff der Anhänger-Kupplungseinheit bzw. dem Begriff der Fahrzeug-Kupplungseinheit umfasst werden. Insbesondere sollen unter dem Begriff der Anhänger-Kupplungseinheit bzw. dem Begriff der Fahrzeug-Kupplungseinheit auch die entsprechenden Kupplungsteile einer Kugelkopfkupplung, also eine Zugkugelkupplung bzw. eine Kupplungskugel, verstanden werden, welche vor allem im Personenkraftwagenbereich zusammen mit leichten Anhängern (mit/ohne Auflaufbremse) dem heutigen Kupplungsstandard entsprechen.

Der Begriff der Koppelposition, wie er in diesem Dokument verwendet wird, beschreibt eine Position von Fahrzeug und Anhänger, in welcher der Anhänger direkt oder im Anschluss an ein (geringfügiges) Bewegen des Anhängers und/oder der Deichsel des Anhängers an das Fahrzeug gekoppelt werden kann. Sofern sich das Fahrzeug in der Koppelposition zum Anhänger befindet, ist es also beispielsweise im Falle einer Kugelkopfkupplung denkbar, dass ein Absenken der Zugkugelkupplung bereits ausreicht, um den Anhänger an das Fahrzeug und dessen Kupplungskugel zu koppeln. Ebenso ist es aber auch denkbar, dass der Anhänger und/oder die Deichsel des Anhängers zusätzlich, beispielsweise lateral und/oder rotatorisch, bewegt werden muss, bis die Anhänger-Kupplungseinheit mit der Fahrzeug-Kupplungseinheit mechanisch zusammenwirken kann, um das Fahrzeug mit dem Anhänger zu koppeln. Unter einer geringfügigen Bewegung ist dabei insbesondere eine laterale Bewegung von wenigen Zentimetern, beispielsweise weniger als 50 cm, zu verstehen, wobei die rotatorische Bewegung durchaus auch 60° oder mehr betragen kann.

Das Erfassen der Freifläche ist vergleichbar mit dem Erfassen einer Parklücke bei einem assistierten Einparkvorgang. Die Freifläche kann beispielsweise in Form eines Rechtecks beschrieben werden. Unabhängig davon kann der Freifläche eine Freiflächenlänge zugeordnet werden. Die Freiflächenlänge beschreibt dabei die Länge der Freifläche in Zugrichtung des Anhängers. In Abhängigkeit der Freiflächenlänge kann die Freifläche charakterisiert werden. Beispielsweise ist denkbar, sofern die Freifläche hinreichend groß ist, dass das Fahrzeug zum Ankoppeln des Anhängers an das Fahrzeug in Längsrichtung vor dem Anhänger geparkt bzw. positioniert werden kann. Bei einer hinreichend große Freiflächenlänge kann die Freifläche also derart charakterisiert werden, dass das Fahrzeug in Längsrichtung vor dem Anhänger geparkt bzw. positioniert werden kann. Umgekehrt ist es denkbar, dass eine Freiflächenlänge die Freifläche dadurch charakterisiert, dass das Fahrzeug nicht in Längsrichtung vor dem Anhänger geparkt werden kann.

Anhand des erfassten parallel zur Fahrbahn geparkten Anhängers mittels der Umfelddaten sowie der erfassten und charakterisierten Freifläche kann zumindest eine Koppelposition bestimmt werden. Die zumindest eine Koppelposition beschreibt dabei zumindest eine mögliche Position des Fahrzeugs zum Ankoppeln des parallel zur Fahrbahn geparkten Anhängers. Wie zuvor beschrieben, kann dem Fahrer des Fahrzeugs beispielsweise eine Koppelposition vorgeschlagen werden, bei welcher das Fahrzeug in Zugrichtung vor dem Anhänger positioniert wird und der Kupplungswinkel 0° beträgt, sofern die Freifläche hinreichend groß ist, um das Fahrzeug in Längsrichtung vor dem Anhänger zu parken bzw. zu positionieren. Der Kupplungswinkel beschreibt in diesem Zusammenhang die Orientierung der Längsachse des Fahrzeugs relativ zu der Längsachse des Anhängers. Mit anderen Worten beschreibt der Kupplungswinkel also den Winkel zwischen der Fahrzeuglängsachse und der Anhängerlängsachse.

Dem Fahrer des Fahrzeugs kann der zumindest eine Koppelpositionsvorschlag, welcher auf der zumindest einen Koppelposition basiert, beispielsweise mittels einer Mensch-Maschine-Schnittstelle unterbreitet werden. Insbesondere ist also eine Darstellung mittels Augmented Reality, Sprache, Displays und/oder dergleichen denkbar. Sofern dem Fahrer mehrere Koppelpositionsvorschläge unterbreitet werden können, ist es denkbar, dass der Fahrer den entsprechenden Koppelpositionsvorschlag mittels eines etwaigen Bedienelements auswählt. Insbesondere können hierzu Touch Screens, eine Gestensteuerung, eine Sprachsteuerung sowie herkömmliche Bedienelemente in Form von Knöpfen verwendet werden.

Eine weitere vorteilhafte Ausgestaltungsform sieht vor, dass sofern die Freiflächenlänge eine in Abhängigkeit des Fahrzeugs vorbestimmte erste Mindestlänge überschreitet, die zumindest eine Koppelposition eine Position des Fahrzeugs beschreibt, bei welcher sich das Fahrzeug vollständig innerhalb der Freifläche befindet. Handelt es sich beispielsweise bei dem Personenkraftwagen um einen Kleinwagen, so kann die vorbestimmte erste Mindestlänge beispielsweise 7 m betragen. Eine gewöhnliche Parklücke, deren Länge einer derartigen vorbestimmten ersten Mindestlänge entspricht bzw. diese überschreitet, reicht meist aus, um einen Kleinwagen in einem Zug in Längsrichtung parallel zur Fahrbahn einzuparken. Überschreitet also die Freiflächenlänge in diesem Fall die vorbestimmte erste Mindestlänge, so kann das Fahrzeug in einem Zug in Zugrichtung vor dem Anhänger geparkt werden bzw. in eine Koppelposition manövriert werden, sodass der Anhänger anschließend an das Fahrzeug gekoppelt werden kann. In einem solchen Fall befindet sich das Fahrzeug also vollständig innerhalb der Freifläche. Die Breite der Freifläche kann also insbesondere größer oder gleich der Breite des Fahrzeugs sein. Folglich beschreibt die zumindest eine Koppelposition eine Position des Fahrzeugs, bei welcher sich das Fahrzeug vollständig innerhalb der Freifläche befindet. Insbesondere befinden sich also bei einer derartigen Koppelposition die Räder des Fahrzeugs innerhalb der Freifläche.

Weiterhin ist es vorteilhaft, dass sofern die Freiflächenlänge eine in Abhängigkeit des Fahrzeugs vorbestimmte zweite Mindestlänge überschreitet, die zumindest eine Koppelposition eine Position des Fahrzeugs beschreibt, bei welcher sich das Fahrzeug bereichsweise innerhalb der Freifläche befindet. Bei einem parallel zur Fahrbahn geparkten Anhänger, beispielsweise auf einem Seitenstreifen der Fahrbahn, kann es oftmals vorkommen, dass sich ein weiterer Verkehrsteilnehmer oder allgemein ein Hindernis in Zugrichtung vor dem Anhänger befindet und das Zugfahrzeug, also das Fahrzeug, an welches der Anhänger gekoppelt werden soll, nicht direkt vor dem Anhänger platziert werden kann. Es kann also vorkommen, dass ein Ankoppeln des Anhängers an das Fahrzeug in einem Kupplungswinkel von 0° nicht möglich ist.

Nichtsdestotrotz, also obwohl sich ein weiterer Verkehrsteilnehmer oder ein allgemeines Hindernis vor dem Anhänger befindet und dem Fahrer des Fahrzeugs aufgrund dessen kein Koppelpositionsvorschlag unterbreitet werden kann, welcher mit einem Einparkmanöver in Längsrichtung vergleichbar ist, kann ein geringer Spielraum vorhanden sein, welcher zumindest eine Koppelposition in einem Kupplungswinkel ungleich null zulässt. Im Zuge dessen ist es also von Vorteil, wenn die Freiflächenlänge eine in Abhängigkeit des Fahrzeugs vorbestimmte zweite Mindestlänge überschreitet. Insbesondere kann die vorbestimmte zweite Mindestlänge von der Breite des Fahrzeugs abhängen. Im Falle eines Personenkraftwagens, welcher beispielsweise eine Länge von 5 m und eine Breite von 2 m aufweist, kann die vorbestimmte zweite Mindestlänge beispielsweise 4 m betragen.

Überschreitet die Freiflächenlänge nun eine derartige vorbestimmte zweite Mindestlänge, so ist es denkbar, dass das Fahrzeug zum Ankoppeln des Anhängers an das Fahrzeug so positioniert wird, dass die Fahrzeuglängsachse nicht parallel zur Fahrtrichtung der Fahrbahn ausgerichtet ist und infolgedessen das Fahrzeug nur bereichsweise innerhalb der Freifläche positioniert ist. Es ist also beispielsweise denkbar, dass sich das Fahrzeug mit den beiden Hinterrädern innerhalb der Freifläche befindet, wohingegen sich die vorderen Räder des Fahrzeugs außerhalb der Freifläche befinden und das Fahrzeug dennoch so positioniert ist, dass der Anhänger an das Fahrzeug angekoppelt werden kann. Zusammengefasst ist es also in diesem Fall vorteilhaft, wenn dem Fahrer des Fahrzeugs ein derartiger Koppelpositionsvorschlag unterbreitet wird, welcher auf einer Koppelposition basiert, bei der sich das Fahrzeug nur bereichsweise innerhalb der Freifläche befindet.

Im Rahmen einer weiteren Ausgestaltungsform ist es vorteilhaft, dass sofern die Freiflächenlänge eine in Abhängigkeit des Fahrzeugs vorbestimmte zweite Mindestlänge unterschreitet, die zumindest eine Koppelposition eine Position des Fahrzeugs beschreibt, bei welcher sich das Fahrzeug im Wesentlichen außerhalb der Freifläche befindet. Ist der parallel zur Fahrbahn geparkte Anhänger beispielsweise vollständig von einem weiteren Verkehrsteilnehmer eingeparkt, so kann es vorkommen, dass das Fahrzeug nicht so positioniert werden kann, dass der Anhänger ohne eine zusätzliche Bewegung an das Fahrzeug angekoppelt werden kann. Mit anderen Worten existiert also keine Koppelposition, bei der der Anhänger ohne ein zusätzliches Manövrieren des Anhängers an das Fahrzeug gekoppelt werden kann. Nichtsdestotrotz kann zumindest eine Koppelposition bestimmt werden, bei welcher das Fahrzeug derart positioniert wird, sodass der Anhänger zum Ankoppeln an das Fahrzeug nur geringfügig bewegt werden muss. Obwohl der Anhänger also nicht direkt an das Fahrzeug angekoppelt werden kann, kann dem Fahrer des Fahrzeugs dennoch zumindest ein Koppelpositionsvorschlag unterbreitet werden.

Ein vollständig eingeparkter parallel zur Fahrbahn geparkter Anhänger ist beispielsweise dadurch gekennzeichnet, dass in Zugrichtung vor dem Anhänger nahezu kein freier Raum verfügbar ist. Mit anderen Worten kann eine in Zugrichtung vor dem Anhänger befindliche Fläche so klein ausfallen, dass ein Fahrzeug nicht einmal bereichsweise innerhalb der Freifläche positioniert werden kann. Die Freiflächenlänge kann in einem solchen Fall eine vorbestimmte zweite Mindestlänge unterschreiten. Die vorbestimmte zweite Mindestlänge kann von den Abmessungen des Fahrzeugs abhängen. Insbesondere kann die vorbestimmte zweite Mindestlänge von der Breite des Fahrzeugs abhängen.

Das Fahrzeug befindet sich dabei im Wesentlichen außerhalb der Freifläche, wenn beispielsweise nur ein Hinterrad innerhalb der Freifläche positioniert wird oder wenn beispielsweise nur ein Teil des hinteren Stoßfängers innerhalb der Freifläche positioniert wird. Das Fahrzeug befindet sich insbesondere auch dann im Wesentlichen außerhalb der Freifläche, wenn sich kein Teil des Fahrzeugs innerhalb der Freifläche, welche zumindest so Breit ist wie der Radstand des Fahrzeugs, befindet.

Zudem ist es vorteilhaft, wenn die zumindest eine Koppelposition, bei welcher sich das Fahrzeug im Wesentlichen außerhalb der Freifläche befindet, so bestimmt wird, dass zum Ankoppeln des parallel zu der Fahrbahn geparkten Anhängers der Anhänger manuell ausschließlich rotatorisch bewegt werden muss. Beispielsweise kann ein Anhänger, welcher nur eine Achse aufweist, um einen Punkt seiner Achse rotatorisch bewegt werden. Beispielsweise kann ein Anhänger also so rotatorisch bewegt werden, dass ein Rad nahezu in seiner Ausgangsposition verharrt, wohingegen sich das gegenüberliegende Rad um das in der Ausgangsposition verharrende Rad, welches in einem derartigen Fall gegebenenfalls gebremst wird, bewegt. Der Anhänger kann aber auch um einen anderen Punkt rotatorisch bewegt werden. Insbesondere kann der Anhänger auch um den Mittelpunkt der Achse rotatorisch bewegt werden.

Ein analoges Beispiel gilt auch für Anhänger, welche eine Achse und mehr als zwei Räder aufweisen. Fahrdynamisch kann ein derartiger Fall auf den einachsigen Fall mit zwei Rädern zurückgeführt werden, indem beispielsweise der Mittelpunkt der Räder der jeweiligen Seite betrachtet wird. Im Fall von mehrachsigen (ungelenkten) Anhängern kann der Punkt, um welchen der Anhänger rotatorisch bewegt wird, entlang einer mittleren Achse, also insbesondere im Mittelpunkt aller Achsen, liegen.

Weist der Anhänger eine Schwenkachslenkung bzw. eine Drehschemellenkung auf, so kann es von Vorteil sein, wenn die zumindest eine Koppelposition, bei welcher sich das Fahrzeug im Wesentlichen außerhalb der Freifläche befindet, so bestimmt wird, dass zum Ankoppeln des parallel zu der Fahrbahn geparkten Anhängers ausschließlich die gelenkte Achse rotatorisch bewegt werden muss. Es kann also von Vorteil sein, wenn die zumindest eine Koppelposition so bestimmt wird, dass im Falle einer Schwenkachslenkung bzw. einer Drehschemellenkung nur eine Achse rotatorisch bewegt wird.

Dem Fahrer des Fahrzeugs kann also eine Koppelposition vorgeschlagen werden, obwohl das Fahrzeug nicht in Zugrichtung vor dem Anhänger positioniert werden kann. Die zumindest eine Koppelposition, welche dem Fahrer des Fahrzeugs vorgeschlagen wird, kann also so bestimmt werden, dass die Anhänger-Kupplungseinheit der Anhängerkupplung des Anhängers nach der manuell ausschließlich rotatorischen Bewegung mit der Fahrzeug-Kupplungseinheit der Anhängerkupplung des Fahrzeugs mechanisch zusammenwirken kann. Insbesondere kann also im Falle einer Kugelkopfkupplung die Zugkugelkupplung nach der manuell ausschließlich rotatorischen Bewegung und einem eventuellen absenken direkt mit der Kupplungskugel verbunden werden, sodass der Anhänger an das Fahrzeug gekoppelt ist.

Eine weitere vorteilhafte Ausgestaltungsform sieht vor, dass die Umfelddaten von dem zumindest einem Umfeldsensor während einer zumindest bereichsweisen Vorbeifahrt des Fahrzeugs an dem parallel zur Fahrbahn geparkten Anhänger und/oder der Freifläche empfangen werden. Während das Fahrzeug an dem parallel zur Fahrbahn geparkten Anhänger vorbei fährt, können Umfelddaten von dem zumindest einen Umfeldsensor empfangen werden. Je nachdem, welche Umfeldsensoren hierbei zum Einsatz kommen, kann sich die zurückgelegte Strecke des Fahrzeugs bei der bereichsweisen Vorbeifahrt unterscheiden. Beispielsweise kann es im Fall von Ultraschall-Sensoren nötig sein, dass das Fahrzeug vollständig an dem Anhänger und/oder der Freifläche vorbeifährt. Wird hingegen alternativ oder zusätzlich eine Kamera verwendet, so ist es denkbar, dass nur eine bereichsweise Vorbeifahrt vonnöten ist.

Es kann also beispielsweise ausreichen, wenn das Fahrzeug den Anhänger und/oder die Freifläche nicht vollständig passiert. Der Koppelpositionsvorschlag bzw. die zumindest eine Koppelposition kann also gegebenenfalls bereits frühzeitig bestimmt werden. Ein derartiges Verfahren ist bereits von zahlreichen Einparkassistenten bekannt. Bei dem erfindungsgemäßen Verfahren und seinen vorgestellten bevorzugten Ausführungsformen ist es im Vergleich zu einem Einparkassistenten jedoch auch nötig, den Anhänger, welcher sich hinter der Freifläche befindet, zuverlässig zu erfassen.

Zudem ist es vorteilhaft, wenn die zumindest eine Koppelposition so bestimmt wird, dass eine vorbestimmte Maximalanzahl an Fahrtrichtungswechseln, welche zum Erreichen der zumindest einen Kuppelposition nötig sind, unterschritten wird. Es ist denkbar, dass der Fahrer des Fahrzeugs es als störend empfindet, wenn zum Erreichen der zumindest einen Koppelposition ein umfangreiches Rangiermanöver durchgeführt werden muss. Daher kann es von Vorteil sein, wenn die zumindest eine Koppelposition so bestimmt wird, dass die zumindest eine Koppelposition auch innerhalb einer vorbestimmten Anzahl an Fahrtrichtungswechseln erreicht werden kann. Dabei ist es denkbar, dass die vorbestimmte Maximalanzahl an Fahrtrichtungswechseln durch den Fahrer des Fahrzeugs, beispielsweise im Rahmen einer Eingabe in einem Menü des Fahrzeugs, vorgegeben wird. Beträgt die vorbestimmte Maximalanzahl an Fahrtrichtungswechseln beispielsweise drei Fahrtrichtungswechsel, so kann die zumindest eine Koppelposition also so bestimmt werden, dass eine derartige Maximalanzahl an Fahrtrichtungswechseln unterschritten wird oder aber beim Unterbreiten des zumindest einen Koppelpositionsvorschlags an den Fahrer nur jene Koppelpositionen der zumindest einen Koppelposition auswählbar sind, welche die vorbestimmte Maximalanzahl an Fahrtrichtungswechseln unterschreiten.

Darüber hinaus ist es vorteilhaft, wenn zumindest eine Abmessung des Anhängers mittels der Umfelddaten bestimmt wird und/oder durch den Fahrer vorgegeben wird, welche zu dem Bestimmen der zumindest einen Koppelposition verwendet wird. Insbesondere kann es bei komplexen Ankoppelvorgängen oder wenn der Anhänger nicht vollständig erfasst werden kann von Vorteil sein, wenn die Abmessungen des Anhängers bekannt sind. Daher ist es also denkbar, dass die zumindest eine Abmessung des Anhängers mittels der Umfelddaten bestimmt wird. Beispielsweise kann die zumindest eine Abmessung des Anhängers mittels eines Ultraschall-Sensors im Rahmen einer Vorbeifahrt an dem Anhänger bestimmt werden.

Es ist aber auch denkbar, dass die Abmessung des Anhängers mittels einer Kamera bestimmt wird. Besonders einfach und zudem sehr genau, kann die zumindest eine Abmessung des Anhängers durch den Fahrer vorgegeben werden. Dabei ist es denkbar, dass der Fahrer des Fahrzeugs die zumindest eine Abmessung des Anhängers in einem Menü des Fahrzeugs vorgibt.

Falls die zumindest eine Koppelposition eine manuelle Bewegung des Anhängers vorsieht, so ist das Wissen über die zumindest eine Abmessung des Anhängers von besonderem Vorteil. Insbesondere kann hierbei die Position der Achse bzw. der Achsen relativ zur Position der Anhänger-Kupplungseinheit der Anhängerkupplung des Anhängers von Bedeutung sein. Sofern also die zumindest eine Abmessung des Anhängers bekannt ist, kann sich die Genauigkeit des zumindest einen Koppelpositionsvorschlags und/oder die Genauigkeit eines zumindest teilautomatisierten Manövrierens des Fahrzeugs hin zu der zumindest einen Koppelposition verbessern.

Schließlich sieht eine weitere vorteilhafte Ausgestaltung vor, dass wenn das Fahrzeug und ein Aufbau des Anhängers, welcher durch die zumindest eine Abmessung des Anhängers definiert wird, einen vorbestimmten Mindestabstand aufweisen, sofern sich das Fahrzeug in der zumindest einen Koppelposition befindet. In einigen der zuvor beschriebenen Szenarien, insbesondere wenn der Kupplungswinkel zwischen der Fahrzeuglängsachse und der Anhängerlängsachse ungleich null ist, kann es vorkommen, dass der Abstand zwischen der Fahrzeugkarosserie und dem Aufbau des Anhängers nur wenige Zentimeter, beispielsweise 20 cm, beträgt. Eine derartige Koppelposition kann für den Fahrer des Fahrzeugs beim direkten Ankoppeln nachteilig sein. Denn, wenn nur wenig Platz zwischen der Fahrzeugkarosserie und dem Aufbau des Anhängers zur Verfügung steht, so muss der Fahrer des Fahrzeugs gegebenenfalls um das Fahrzeug bzw. um den Anhänger herum gehen, um zu der Anhängerkupplung des Fahrzeugs sowie der Anhängerkupplung des Anhängers zu gelangen.

Werden dem Fahrer des Fahrzeugs nur diejenigen Koppelpositionen vorgeschlagen bzw. sind nur diejenigen Koppelpositionen für den Fahrer des Fahrzeugs auswählbar, bei welchen das Fahrzeug und der Aufbau des Anhängers einen vorbestimmten Mindestabstand aufweisen, so kann sich der Ankoppelvorgang, bei welchem die Anhänger-Kupplungseinheit der Anhängerkupplung des Anhängers direkt mit der Fahrzeug-Kupplungseinheit der Anhängerkupplung des Fahrzeugs verbunden werden kann, für den Fahrer des Fahrzeugs gegebenenfalls vereinfachen. Hierbei ist es auch denkbar, dass ein derartiger vorbestimmter Mindestabstand nur bei positiven oder nur bei negativen Kupplungswinkeln berücksichtigt wird.

Von einem positiven Kupplungswinkel bzw. einem positiven Winkel zwischen der Fahrzeuglängsachse und der Anhängerlängsachse wird im Rahmen des Dokuments gesprochen, wenn das Gespann aus Fahrzeug und Anhänger beispielsweise eine Linkskurve durchfahren. Für gewöhnlich befindet sich der Fahrersitz des Fahrzeugs auf der linken Fahrzeugseite. Im Falle eines positiven Kupplungswinkels zwischen der Fahrzeuglängsachse und der Anhängerlängsachse kann es demnach vorkommen, dass das Fahrzeug und der Aufbau des Anhängers so zueinander positioniert sind, dass der Fahrer des Fahrzeugs zum Ankoppeln des Anhängers an das Fahrzeug um das Fahrzeug herum bzw. um den Anhänger herum gehen muss. Dies kann für den Fahrer des Fahrzeugs als unangenehm empfunden werden. In einem derartigen Fall ist es also wünschenswert, wenn das Fahrzeug und der Aufbau des Anhängers einen vorbestimmten Mindestabstand aufweisen. Dabei ist es denkbar, dass der Fahrer den vorbestimmten Mindestabstand selbst vorgibt. Eine derartige Vorgabe kann beispielsweise über ein Menü des Fahrzeugs erfolgen.

Eine weitere vorteilhafte Ausgestaltungsform sieht schließlich vor, dass ein Kupplungswinkel zwischen der Längsachse des Fahrzeugs und der Längsachse des Anhängers einen maximalen Kupplungswinkel, welcher durch die zumindest eine Abmessung des Anhängers vorbestimmt ist, unterschreitet, sofern sich das Fahrzeug in der zumindest einen Koppelposition befindet. Mittels eines derartigen maximalen Kopplungswinkels kann beispielsweise vermieden werden, dass das Fahrzeug und der Aufbau des Anhängers miteinander kollidieren. Darüber hinaus kann mittels eines maximalen Kopplungswinkels eine angenehmere Ausgangslage für den Fahrer gewährleistet werden, wenn er mit dem Gespann aus Fahrzeug und Anhänger losfährt.

Eine erfindungsgemäße Recheneinrichtung ist zum Durchführen eines erfindungsgemäßen Verfahrens und der vorteilhaften Ausgestaltungen davon eingerichtet. Die Recheneinrichtung kann dabei vorzugsweise einen oder mehrere programmierbare Prozessoren, die einen in dessen Arbeitsspeicher geladenen Programmcode eines Computerprogramms abarbeiten, umfassen.

Ein erfindungsgemäßes Assistenzsystem für ein Fahrzeug ist zum Durchführen eines erfindungsgemäßen Verfahrens und der vorteilhaften Ausgestaltungen davon eingerichtet. Das Assistenzsystem kann zumindest einen Umfeldsensor aufweisen, mit dem/denen Umfelddaten, welche die Umgebung des Fahrzeugs beschreiben, bereitgestellt werden können. Darüber hinaus kann das Assistenzsystem eine erfindungsgemäße Recheneinrichtung aufweisen, die beispielsweise durch zumindest ein elektronisches Steuergerät gebildet sein kann. Das Assistenzsystem kann zudem eine Mensch-Maschine-Schnittstelle zum Unterbreiten von zumindest einem Koppelpositionsvorschlag umfassen. Ferner kann das Assistenzsystem dazu ausgebildet sein, das Fahrzeug in eine Koppelposition zumindest teilautomatisiert zu manövrieren.

Ein weiterer Aspekt der Erfindung betrifft ein Computerprogramm, umfassend Befehle, die bei der Ausführung des Programms durch eine Recheneinrichtung diese veranlassen, ein erfindungsgemäßes Verfahren und die vorteilhaften Ausgestaltungen davon auszuführen. Des Weiteren betrifft die Erfindung ein computerlesbares (Speicher)Medium, umfassend Befehle, die bei der Ausführung durch eine Recheneinrichtung diese veranlassen, ein erfindungsgemäßes Verfahren und die vorteilhaften Ausgestaltungen davon auszuführen.

Die mit Bezug auf das erfindungsgemäße Verfahren vorgestellten bevorzugten Ausführungsformen und deren Vorteile gelten entsprechend für die erfindungsgemäße Recheneinrichtung, für das erfindungsgemäße Assistenzsystem, für das erfindungsgemäße Fahrzeug, für das erfindungsgemäße Computerprogramm sowie für das erfindungsgemäße computerlesbare (Speicher)Medium.

Die Erfindung wird nun anhand von bevorzugten Ausführungsbeispielen sowie unter Bezugnahme auf die beigefügten Zeichnungen näher erläutert. Dabei zeigen:
- Fig. 1: eine schematische Darstellung eines Fahrzeugs, umfassend ein Assistenzsystem zum Unterstützen während eines Ankoppelvorgangs mit einem Anhänger,
- Fig. 2: eine schematische Darstellung eines Fahrzeugs, welches sich während eines Ankoppelvorgangs mit einem parallel zu einer Fahrbahn geparkten Anhänger entlang einer Trajektorie bewegt, und sich zum Ankoppeln vollständig innerhalb einer Freifläche befindet,
- Fig. 3: eine schematische Darstellung eines Fahrzeugs, welches sich während eines Ankoppelvorgangs entlang einer Trajektorie bewegt, und sich beim Ankoppeln eines parallel zu einer Fahrbahn geparkten Anhängers zumindest bereichsweise innerhalb einer Freifläche befindet,
- Fig. 4: eine schematische Darstellung eines Fahrzeugs, welches sich während eines Ankoppelvorgangs entlang einer Trajektorie bewegt, und sich beim Ankoppeln eines parallel zu einer Fahrbahn geparkten Anhängers im Wesentlichen außerhalb einer Freifläche befindet,
- Fig. 5: eine schematische Darstellung eines Fahrzeugs sowie eines an das Fahrzeug angekoppelten Anhängers im Anschluss an den in Fig. 4 dargestellten Ankoppelvorgang.

In den Figuren werden gleiche oder funktionsgleiche Elemente mit den gleichen Bezugszeichen versehen.

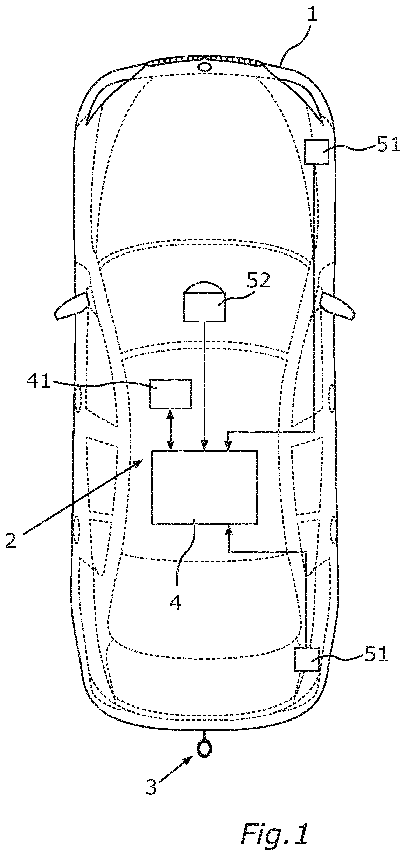

Fig. 1 zeigt in einer schematischen Darstellung ein Fahrzeug 1, welches ein Assistenzsystem 2 zum Unterstützen eines Fahrers eines Fahrzeugs 1 bei einem Ankoppelvorgangs des Fahrzeugs mit einem parallel zu einer Fahrbahn 8 geparkten Anhänger 7 aufweist. Um den parallel zur Fahrbahn 8 geparkten Anhänger 7 an das Fahrzeug zu koppeln, weist das Fahrzeug 1 eine Anhängerkupplung 3 in Form einer Kugelkopfkupplung auf. Eine Recheneinrichtung 4 empfängt von zumindest einem Umfeldsensor 51, 52 Umfelddaten. In Fig. 1 weist das Fahrzeug 1 eine Kamera 52 sowie zwei Ultraschall-Sensoren 51 als Umfeldsensoren 51, 52 auf.

Mittels der Umfelddaten kann so ein parallel zur Fahrbahn 8 geparkter Anhänger 7 erfasst werden. Zudem kann eine Freifläche 11 mittels der Umfelddaten bestimmt werden. In Abhängigkeit von der Freifläche 11 kann eine Koppelposition, welche eine mögliche Position des Fahrzeugs 1 zum Ankoppeln des parallel zur Fahrbahn 8 geparkten Anhängers 7 beschreibt, bestimmt werden. Anschließend kann dem Fahrer des Fahrzeugs 1 bzw. einem Nutzer des Fahrzeugs 1 zumindest ein Koppelpositionsvorschlag unterbreitet werden, welcher auf der zumindest einen Koppelposition basiert. Der Koppelpositionsvorschlag kann beispielsweise mittels einer Mensch-Maschine-Schnittstelle 41 unterbreitet werden

Das Fahrzeug 1 ist hierbei exemplarisch als Personenkraftwagen dargestellt. Darüber hinaus kann es sich bei dem Fahrzeug jedoch auch um einen Lastkraftwagen, einen Nutzkraftwagen, ein Wohnmobil oder dergleichen handeln.

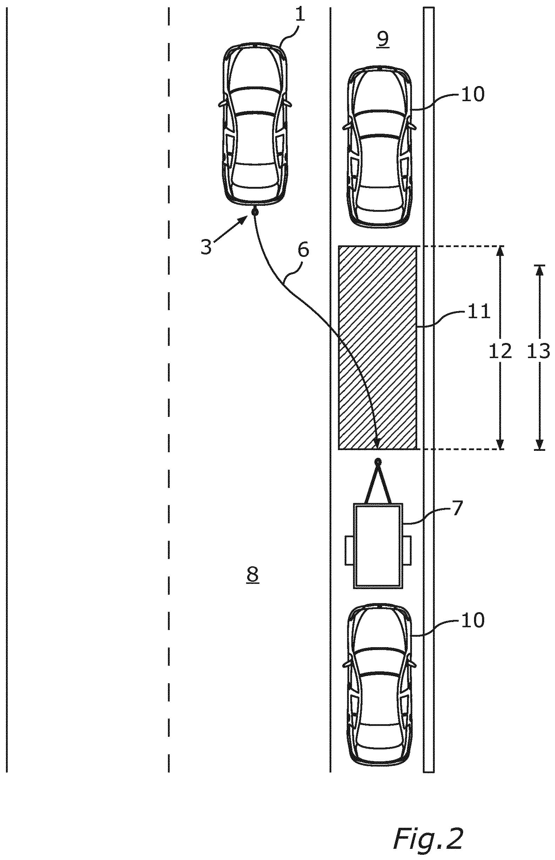

Fig. 2 zeigt in einer schematischen Darstellung das Fahrzeug 1, welches sich während eines Ankoppelvorgangs mit einem parallel zu einer Fahrbahn 8 geparkten Anhänger 7 entlang einer Trajektorie 6 bewegt, an deren Ende der parallel zur Fahrbahn 8 geparkte Anhänger 7 an das Fahrzeug 1 angekoppelt werden kann. Mittels der Umfelddaten des zumindest einen Umfeldsensors 51, 52 kann der parallel zur Fahrbahn 8 geparkte Anhänger 7 erfasst werden. Der parallel zur Fahrbahn 8 geparkte Anhänger 7 befindet sich dabei auf einem Seitenstreifen 9. Hinter dem Anhänger 7 befindet sich ein weiterer Verkehrsteilnehmer 10. In Zugrichtung vor dem Anhänger 7 befindet sich eine Freifläche 11, bei der es sich um ungenutzten Parkraum auf dem Seitenstreifen 9 handelt. Die Freifläche 11 wird dabei von dem Anhänger 7 sowie einem weiteren Verkehrsteilnehmer 10, welcher sich in Zugrichtung vor dem Anhänger 7 und der Freifläche 11 befindet, begrenzt.

Die Freifläche 11 kann in Abhängigkeit ihrer Ausdehnung in Zugrichtung des Anhängers 7, der Freiflächenlänge 12, charakterisiert werden. In Fig. 2 kann die Freifläche 11 beispielsweise dadurch charakterisiert werden, dass das Fahrzeug 1 mittels eines Einparkmanövers entlang der Trajektorie 6 vollständig innerhalb der Freifläche 11 positioniert werden kann. Folglich kann in der Situation von Fig. 2 zumindest eine Koppelposition bestimmt werden, bei welcher sich das Fahrzeug 1 vollständig innerhalb der Freifläche 11 befindet. Die Breite der Freifläche 11 kann dabei insbesondere größer oder gleich der Breite des Fahrzeugs 1 sein.

Damit die zumindest eine Koppelposition, bei welcher sich das Fahrzeug 1 vollständig innerhalb der Freifläche 11 befindet, mittels einer möglichst einfachen Trajektorie 6 bzw. mit möglichst wenigen Fahrtrichtungswechseln während eines Manövrierens entlang der Trajektorie 6 für das Fahrzeug 1 erreichbar ist, ist es von Vorteil, wenn bei der Charakterisierung der Freifläche 11 mittels der Freiflächenlänge 12 die Freiflächenlänge 12 eine vorbestimmte erste Mindestlänge 13 überschreitet. Eine vorbestimmte erste Mindestlänge 13 kann beispielsweise dadurch bestimmt sein, dass das Fahrzeug 1 mittels eines Einparkmanövers vollständig innerhalb der Freifläche 11 positioniert werden kann. Insbesondere kann die vorbestimmte erste Mindestlänge 13 von der Länge des Fahrzeugs 1 abhängen.

Der Anhänger 7 ist hierbei exemplarisch als einfacher Pkw-Anhänger dargestellt. Ebenso kann es sich bei dem Anhänger 7 jedoch auch um einen Bootstrailer, einen Wohnwagen, einen Pferdeanhänger, einen Sattelanhänger oder dergleichen handeln. In dem vorliegenden Beispiel handelt es sich um einen ungelenkten Anhänger. Es ist jedoch ebenso denkbar, dass der Anhänger eine Schwenkachslenkung bzw. eine Drehschemellenkung aufweist.

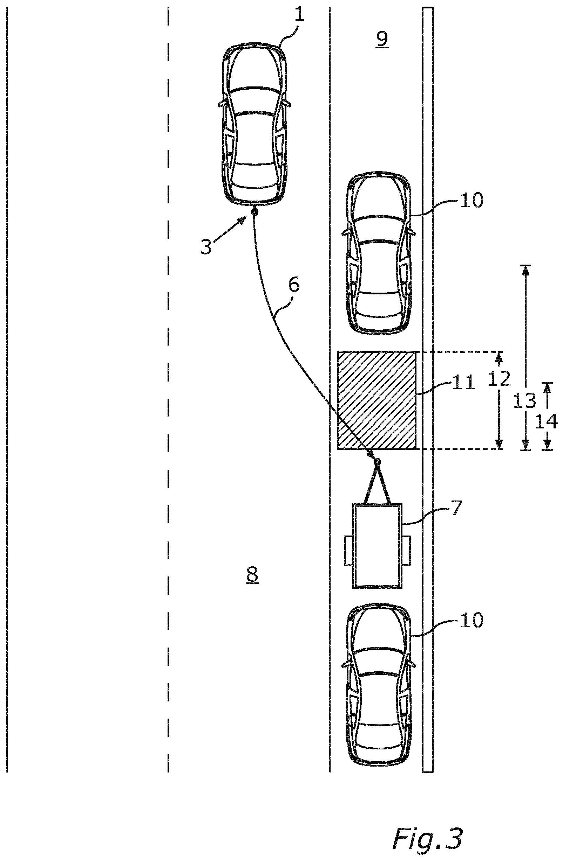

Fig. 3 zeigt in einer schematischen Darstellung das Fahrzeug 1, welches sich während eines Ankoppelvorgangs mit einem parallel zu einer Fahrbahn 8 geparkten Anhänger 7 entlang einer Trajektorie 6 bewegt, an deren Ende der parallel zur Fahrbahn 8 geparkte Anhänger 7 an das Fahrzeug 1 angekoppelt werden kann. Der Anhänger 7 befindet sich dabei auf dem Seitenstreifen 9 und ist parallel zur Fahrbahn 8 geparkt. In Zugrichtung vor dem Anhänger 7 befindet sich eine Freifläche 11. Die Freifläche 11 ist durch den Anhänger 7 sowie einen weiteren Verkehrsteilnehmer 10 begrenzt.

Im Gegensatz zu Fig. 2 ist die Freifläche 11 in Fig. 3 jedoch nicht ausreichend groß, um das Fahrzeug 1 in Längsrichtung vor dem Anhänger 7 zu positionieren. Es kann jedoch zumindest eine Koppelposition bestimmt werden, bei welcher sich das Fahrzeug 1 bereichsweise innerhalb der Freifläche 11 befindet. Die Freifläche 11 kann also in dieser Situation beispielsweise dadurch charakterisiert werden, dass das Fahrzeug 1 nicht in Längsrichtung vor dem Anhänger 7 positioniert werden kann, jedoch mittels eines Manövrierens entlang der Trajektorie 6 bereichsweise innerhalb der Freifläche 11 positioniert werden kann. Mit anderen Worten kann die Freifläche 11 mittels der Freiflächenlänge 12 beispielsweise dadurch charakterisiert werden, dass die Freiflächenlänge 12 eine vorbestimmte erste Mindestlänge 13 unterschreitet und eine vorbestimmte zweite Mindestlänge 14 überschreitet. Die vorbestimmte zweite Mindestlänge 14 kann dabei insbesondere von der Breite und/oder der Länge des Fahrzeugs 1 abhängen.

In diesem Beispiel kann das Fahrzeug 1, nach einem Manövrieren entlang der Trajektorie 6, so positioniert werden, dass sich die beiden Hinterräder innerhalb der Freifläche 11 befinden, wohingegen sich die vorderen Räder des Fahrzeugs 1 außerhalb der Freifläche 11 befinden und der Anhänger 7 dennoch direkt an das Fahrzeug 1 angekoppelt werden kann. Dem Fahrer des Fahrzeugs 1 kann also zumindest ein Koppelpositionsvorschlag unterbreitet werden, welcher auf einer Koppelposition basiert, bei welcher sich das Fahrzeug zumindest bereichsweise innerhalb der Freifläche 11 befindet.

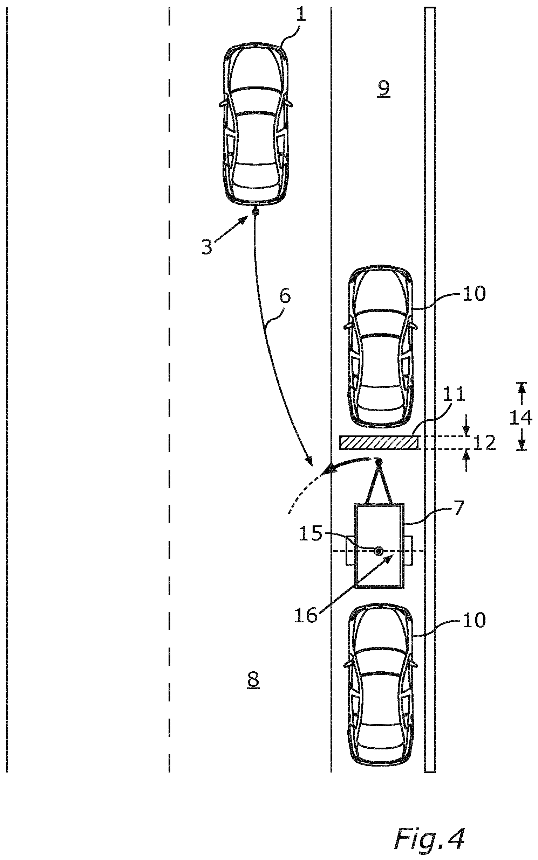

Fig. 4 zeigt in einer schematischen Darstellung das Fahrzeug 1, welches sich während eines Ankoppelvorgangs mit einem parallel zu einer Fahrbahn 8 geparkten Anhänger 7 entlang einer Trajektorie 6 bewegt, an deren Ende der parallel zur Fahrbahn 8 geparkte Anhänger 7 erst nach einer rotatorischen Bewegung an das Fahrzeug 1 angekoppelt werden kann. Der Anhänger 7 befindet sich dabei auf dem Seitenstreifen 9 und ist parallel zur Fahrbahn 8 geparkt. In Zugrichtung vor dem Anhänger befindet sich eine Freifläche 11, welche in diesem Beispiel überaus klein ausgebildet ist und durch den Anhänger 7 sowie einen unmittelbar vor dem Anhänger 7 befindlichen weiteren Verkehrsteilnehmer 10 begrenzt.

Die Freifläche 11 kann in Fig. 4 beispielsweise dadurch charakterisiert werden, dass das Fahrzeug 1 nicht in Längsrichtung vor dem Anhänger 7 positioniert werden kann und nicht einmal bereichsweise so innerhalb der Freifläche 11 positioniert werden kann, dass der Anhänger 7 direkt an das Fahrzeug 1 angekoppelt werden kann. Mit anderen Worten kann die Freifläche 11 mittels der Freiflächenlänge 12 beispielsweise dadurch charakterisiert werden, dass die Freiflächenlänge 12 sogar eine vorbestimmte zweite Mindestlänge 14 unterschreitet. Nichtsdestotrotz kann zumindest eine Koppelposition bestimmt werden, bei welcher das Fahrzeug 1 so positioniert wird, dass der Anhänger 7 zum Ankoppeln an das Fahrzeug 1 nach einer rotatorisch Bewegung an das Fahrzeug 1 angekoppelt werden kann. Mit anderen Worten kann dem Fahrer des Fahrzeugs 1 also dennoch zumindest ein Koppelpositionsvorschlag unterbreitet werden.

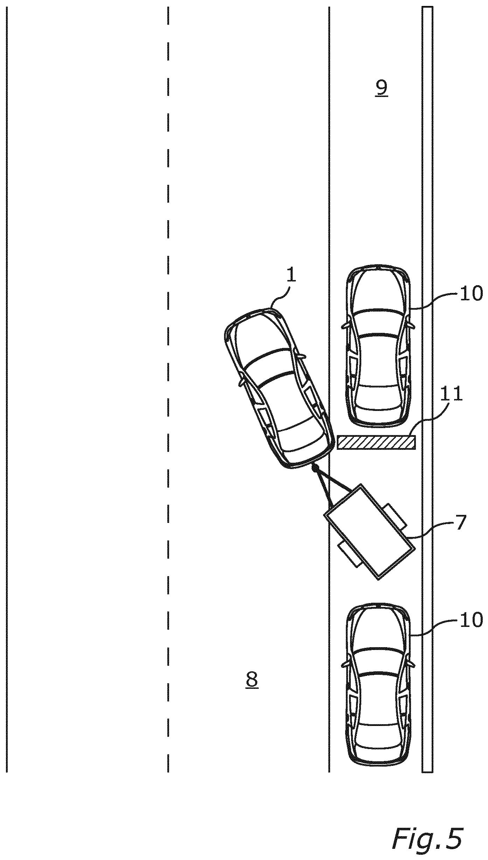

Wenn sich das Fahrzeug 1 in der zumindest einen Koppelposition befindet, kann der Anhänger 7 beispielsweise um einen Punkt 15, welcher entlang der Achse 16 des Anhängers 7 liegen kann, rotatorisch bewegt werden. In Fig. 5 ist der an das Fahrzeug 1 angekoppelte Anhänger 7 gemäß der in Fig. 4 beschriebenen Situation dargestellt. Der zumindest eine Koppelpositionsvorschlag, welcher beispielsweise in der Situation von Fig. 4 dem Fahrer des Fahrzeugs 1 unterbreitet werden kann, kann ebenfalls in der Situation von Fig. 2 und in der Situation von Fig. 3 dem Fahrer des Fahrzeugs 1 unterbreitet werden.

Ebenso kann der zumindest eine Koppelpositionsvorschlag, welcher in der Situation von Fig. 3 dem Fahrer des Fahrzeugs 1 unterbreitet werden kann, dem Fahrer des Fahrzeugs 1 in der Situation von Fig. 2 unterbreitet werden.

## Patentansprüche

1. Verfahren zum Unterstützen eines Fahrers eines Fahrzeugs (1) bei einem Ankoppelvorgang des Fahrzeugs mit einem parallel zu einer Fahrbahn (8) geparkten Anhänger (7), umfassend die Schritte:
- Empfangen von Umfelddaten von zumindest einem Umfeldsensor (51, 52),
- Erfassen des parallel zur Fahrbahn (8) geparkten Anhängers (7) mittels der Umfelddaten,
- Bestimmen von zumindest einer Koppelposition, welche eine mögliche Position des Fahrzeugs (1) zum Ankoppeln des parallel zu der Fahrbahn (8) geparkten Anhängers (7) beschreibt, und
- Unterbreiten von zumindest einem Koppelpositionsvorschlag an den Fahrer, wobei der Koppelpositionsvorschlag auf der zumindest einen Koppelposition basiert,
**dadurch gekennzeichnet, dass**
- eine Freifläche (11), welche eine in Zugrichtung vor dem Anhänger (7) befindliche Fläche beschreibt, mittels der Umfelddaten bestimmt wird,
- die Freifläche (11) in Abhängigkeit einer in Zugrichtung des Anhängers (7) bestimmten Freiflächenlänge (12) charakterisiert wird, und
- die zumindest eine Koppelposition in Abhängigkeit von der charakterisierten Freiflächenlänge (12) bestimmt wird.

2. Verfahren nach Anspruch 1,
**dadurch gekennzeichnet, dass**
sofern die Freiflächenlänge (12) eine in Abhängigkeit des Fahrzeugs (1) vorbestimmte erste Mindestlänge (13) überschreitet, die zumindest eine Koppelposition eine Position des Fahrzeugs (1) beschreibt, bei welcher sich das Fahrzeug (1) vollständig innerhalb der Freifläche (11) befindet.

3. Verfahren nach Anspruch 1 oder 2,
**dadurch gekennzeichnet, dass**
sofern die Freiflächenlänge (12) eine in Abhängigkeit des Fahrzeugs (1) vorbestimmte zweite Mindestlänge (14) überschreitet, die zumindest eine Koppelposition eine Position des Fahrzeugs (1) beschreibt, bei welcher sich das Fahrzeug (1) bereichsweise innerhalb der Freifläche (11) befindet.

4. Verfahren nach einem der vorhergehenden Ansprüche,
**dadurch gekennzeichnet, dass**
sofern die Freiflächenlänge (12) eine in Abhängigkeit des Fahrzeugs (1) vorbestimmte zweite Mindestlänge (14) unterschreitet, die zumindest eine Koppelposition eine Position des Fahrzeugs (1) beschreibt, bei welcher sich das Fahrzeug (1) im Wesentlichen außerhalb der Freifläche (11) befindet.

5. Verfahren nach Anspruch 4,
**dadurch gekennzeichnet, dass**
die zumindest eine Koppelposition, bei welcher sich das Fahrzeug (1) im Wesentlichen außerhalb der Freifläche (11) befindet, so bestimmt wird, dass zum Ankoppeln des parallel zu der Fahrbahn (8) geparkten Anhängers (7) der Anhänger (7) manuell ausschließlich rotatorisch bewegt werden muss.

6. Verfahren nach einem der vorhergehenden Ansprüche,
**dadurch gekennzeichnet, dass**
die Umfelddaten von dem zumindest einem Umfeldsensor (51, 52) während einer zumindest bereichsweisen Vorbeifahrt des Fahrzeugs (1) an dem parallel zur Fahrbahn (8) geparkten Anhänger (7) und/oder der Freifläche (11) empfangen werden.

7. Verfahren nach einem der vorhergehenden Ansprüche,
**dadurch gekennzeichnet, dass**
die zumindest eine Koppelposition so bestimmt wird, dass eine vorbestimmte Maximalanzahl an Fahrtrichtungswechseln, welche zum Erreichen der zumindest einen Koppelposition nötig sind, unterschritten wird.

8. Verfahren nach einem der vorhergehenden Ansprüche,
**dadurch gekennzeichnet, dass**
zumindest eine Abmessung des Anhängers (7) mittels der Umfelddaten bestimmt wird und/oder durch den Fahrer vorgegeben wird, welche zu dem Bestimmen der zumindest einen Koppelposition verwendet wird.

9. Verfahren nach Anspruch 8,
**dadurch gekennzeichnet, dass**
das Fahrzeug (1) und ein Aufbau des Anhängers (7), welcher durch die zumindest eine Abmessung des Anhängers (7) definiert wird, einen vorbestimmten Mindestabstand aufweisen, sofern sich das Fahrzeug (1) in der zumindest einen Koppelposition befindet.

10. Verfahren nach Anspruch 8 oder 9,
**dadurch gekennzeichnet, dass**
ein Kupplungswinkel zwischen der Längsachse des Fahrzeugs (1) und der Längsachse des Anhängers (7) einen maximalen Kupplungswinkel, welcher durch die zumindest eine Abmessung des Anhängers (7) vorbestimmt ist, unterschreitet, sofern sich das Fahrzeug (1) in der zumindest einen Koppelposition befindet.

11. Recheneinrichtung (4), welche dazu eingerichtet ist, ein Verfahren zum Unterstützen eines Fahrers eines Fahrzeugs (1) bei einem Ankoppelvorgang des Fahrzeugs (1) mit einem Anhänger (7), gemäß einem der vorhergehenden Ansprüche, auszuführen.

12. Computerprogramm, umfassend Befehle, die bewirken, dass die Recheneinrichtung (4) des Anspruchs 11 die Verfahrensschritte nach einem der Ansprüche 1 bis 10 ausführt.

13. Computerlesbares Medium, insbesondere ein Speichermedium, auf dem das Computerprogramm nach Anspruch 12 gespeichert ist.

14. Assistenzsystem (2) zum Unterstützen eines Fahrers eines Fahrzeugs (1) bei einem Ankoppelvorgang des Fahrzeugs (1) mit einem Anhänger (7), umfassend:
- eine Recheneinrichtung (4) nach Anspruch 11,
- zumindest einen Umfeldsensor (51, 52), welcher Umfelddaten bereitstellt, welche eine Umgebung des Fahrzeugs (1) beschreiben, und
- eine Mensch-Maschine-Schnittstelle (41) zum Unterbreiten von zumindest einem Koppelpositionsvorschlag.

15. Fahrzeug (1), umfassend ein Assistenzsystem (2) nach Anspruch 14.

## Claims

1. A method for assisting a driver of a vehicle (1) in a coupling process of the vehicle with a trailer (7) parked parallel to a roadway (8), comprising the steps:
- receiving environmental data from at least one environmental sensor (51, 52),
- detecting the trailer (7) parked parallel to the roadway (8) by means of the environmental data,
- determining at least one coupling position which describes a possible position of the vehicle (1) for coupling to the trailer (7) parked parallel to the roadway (8), and
- presenting at least one coupling position proposal to the driver, wherein the coupling position proposal is based on the at least one coupling position,
**characterized in that**
- a free area (11), which describes an area located in front of the trailer (7) in the towing direction, is determined by means of the environmental data,
- the free area (11) is characterized depending on a free area length (12) determined in the towing direction of the trailer (7), and
- the at least one coupling position is determined depending on the characterized free area length (12).

2. The method according to claim 1,
**characterized in that**
if the free area length (12) exceeds a predetermined first minimum length (13) depending on the vehicle (1), the at least one coupling position describes a position of the vehicle (1) in which the vehicle (1) is completely within the free area (11).

3. The method according to claim 1 or 2,
**characterized in that**
if the free area length (12) exceeds a predetermined second minimum length (14) depending on the vehicle (1), the at least one coupling position describes a position of the vehicle (1) in which the vehicle (1) is partially within the free area (11).

4. The method according to any one of the preceding claims,
**characterized in that**
if the free area length (12) is less than a predetermined second minimum length (14) depending on the vehicle (1), the at least one coupling position describes a position of the vehicle (1) in which the vehicle (1) is substantially outside the free area (11).

5. The method according to claim 4,
**characterized in that**
the at least one coupling position, in which the vehicle (1) is located substantially outside the free area (11), is determined in such a manner that for the coupling to the trailer (7) parked parallel to the roadway (8), the trailer (7) must be manually moved only rotationally.

6. The method according to any one of the preceding claims,
**characterized in that**
the environmental data are received from the at least one environmental sensor (51, 52) during at least a partial passage of the vehicle (1) past the trailer (7) parked parallel to the roadway (8) and/or the free area (11).

7. The method according to any one of the preceding claims,
**characterized in that**
the at least one coupling position is determined in such a manner that a predetermined maximum number of driving direction changes necessary to reach the at least one coupling position is not exceeded.

8. The method according to any one of the preceding claims,
**characterized in that**
at least one dimension of the trailer (7) is determined by means of the environmental data and/or is specified by the driver, which is used for determining the at least one coupling position.

9. The method according to claim 8,
**characterized in that**
the vehicle (1) and a structure of the trailer (7), which is defined by the at least one dimension of the trailer (7), have a predetermined minimum distance if the vehicle (1) is in the at least one coupling position.

10. The method according to claim 8 or 9,
**characterized in that**
a coupling angle between the longitudinal axis of the vehicle (1) and the longitudinal axis of the trailer (7) is less than a maximum coupling angle, which is predetermined by the at least one dimension of the trailer (7), if the vehicle (1) is in the at least one coupling position.

11. A computing device (4) which is configured to execute a method for assisting a driver of a vehicle (1) during a coupling process of the vehicle (1) with a trailer (7), according to any one of the preceding claims.

12. A computer program, comprising instructions that cause the computing device (4) of claim 11 to execute the method steps according to any one of claims 1 to 10.

13. A computer-readable medium, in particular storage medium, on which the computer program according to claim 12 is stored.

14. An assistance system (2) for supporting a driver of a vehicle (1) during a coupling process of the vehicle (1) with a trailer (7), comprising:
- a computing device (4) according to claim 11,
- at least one environmental sensor (51, 52) which provides environmental data describing an environment of the vehicle (1), and
- a human-machine interface (41) for presenting at least one coupling position proposal.

15. A vehicle (1), comprising an assistance system (2) according to claim 14.

## Revendications

1. Procédé d'assistance à un conducteur d'un véhicule (1) lors d'un processus d'attelage du véhicule à une remorque (7) garée parallèlement à une chaussée (8), comprenant les étapes suivantes :
- réception de données environnementales d'au moins un capteur environnemental (51, 52),
- détection de la remorque (7) garée parallèlement à la chaussée (8) au moyen des données environnementales,
- détermination d'au moins une position d'attelage qui décrit une position possible du véhicule (1) pour l'attelage à la remorque (7) garée parallèlement à la chaussée (8), et
- présentation d'au moins une proposition de position d'attelage au conducteur, la proposition de position d'attelage étant basée sur l'au moins une position d'attelage,
**caractérisé en ce que**
- une zone libre (11), qui décrit une surface située devant la remorque (7) dans la direction de traction, est déterminée au moyen des données environnementales,
- la zone libre (11) est caractérisée en fonction d'une longueur de zone libre (12) déterminée dans la direction de traction de la remorque (7), et
- l'au moins une position d'attelage est déterminée en fonction de la longueur de zone libre (12) caractérisée.

2. Procédé selon la revendication 1,
**caractérisé en ce que**
si la longueur de zone libre (12) dépasse une première longueur minimale prédéterminée (13) en fonction du véhicule (1), l'au moins une position d'attelage décrit une position du véhicule (1) dans laquelle le véhicule (1) se trouve entièrement à l'intérieur de la zone libre (11).

3. Procédé selon la revendication 1 ou 2,
**caractérisé en ce que**
si la longueur de zone libre (12) dépasse une deuxième longueur minimale prédéterminée (14) en fonction du véhicule (1), l'au moins une position d'attelage décrit une position du véhicule (1) dans laquelle le véhicule (1) se trouve partiellement à l'intérieur de la zone libre (11).

4. Procédé selon l'une quelconque des revendications précédentes,
**caractérisé en ce que**
si la longueur de zone libre (12) est inférieure à une deuxième longueur minimale prédéterminée (14) en fonction du véhicule (1), l'au moins une position d'attelage décrit une position du véhicule (1) dans laquelle le véhicule (1) se trouve essentiellement à l'extérieur de la zone libre (11).

5. Procédé selon la revendication 4,
**caractérisé en ce que**
l'au moins une position d'attelage dans laquelle le véhicule (1) se trouve essentiellement à l'extérieur de la zone libre (11) est déterminée de telle sorte que pour l'attelage à la remorque (7) garée parallèlement à la chaussée (8), la remorque (7) ne doit être déplacée manuellement que de manière rotative.

6. Procédé selon l'une quelconque des revendications précédentes,
**caractérisé en ce que**
les données environnementales sont reçues de l'au moins un capteur environnemental (51, 52) pendant un passage au moins partiel du véhicule (1) devant la remorque (7) garée parallèlement à la chaussée (8) et/ou la zone libre (11).

7. Procédé selon l'une quelconque des revendications précédentes,
**caractérisé en ce que**
l'au moins une position d'attelage est déterminée de telle sorte qu'un nombre maximal prédéterminé de changements de direction de conduite nécessaires pour atteindre l'au moins une position d'attelage ne soit pas dépassé.

8. Procédé selon l'une quelconque des revendications précédentes,
**caractérisé en ce que**
au moins une dimension de la remorque (7) est déterminée au moyen des données environnementales et/ou spécifiée par le conducteur, laquelle est utilisée pour déterminer l'au moins une position d'attelage.

9. Procédé selon la revendication 8,
**caractérisé en ce que**
le véhicule (1) et une structure de la remorque (7), qui est définie par l'au moins une dimension de la remorque (7), ont une distance minimale prédéterminée lorsque le véhicule (1) se trouve dans l'au moins une position d'attelage.

10. Procédé selon la revendication 8 ou 9,
**caractérisé en ce que**
un angle d'attelage entre l'axe longitudinal du véhicule (1) et l'axe longitudinal de la remorque (7) est inférieur à un angle d'attelage maximal prédéterminé par l'au moins une dimension de la remorque (7) lorsque le véhicule (1) se trouve dans l'au moins une position d'attelage.

11. Dispositif de calcul (4) configuré pour exécuter un procédé d'assistance à un conducteur d'un véhicule (1) lors d'un processus d'attelage du véhicule (1) à une remorque (7), selon l'une quelconque des revendications précédentes.

12. Programme informatique comprenant des instructions qui amènent le dispositif de calcul (4) selon la revendication 11 à exécuter les étapes du procédé selon l'une quelconque des revendications 1 à 10.

13. Support lisible par ordinateur, en particulier support de stockage, sur lequel est stocké le programme informatique selon la revendication 12.

14. Système d'assistance (2) pour assister un conducteur d'un véhicule (1) lors d'un processus d'attelage du véhicule (1) à une remorque (7), comprenant :
- un dispositif de calcul (4) selon la revendication 11,
- au moins un capteur environnemental (51, 52) qui fournit des données environnementales décrivant un environnement du véhicule (1), et
- une interface homme-machine (41) pour présenter au moins une proposition de position d'attelage.

15. Véhicule (1) comprenant un système d'assistance (2) selon la revendication 14.
